# EUROPÄISCHE PATENTSCHRIFT

(11) **EP 2 476 937 B1**
(45) Veröffentlichungstag und Bekanntmachung des Hinweises auf die Patenterteilung: **27.08.2014**
(21) Anmeldenummer: 12151008.5
(22) Anmeldetag: 12.01.2012
(51) Int. Cl.: F16K 15/03, F16K 27/02

(54) **Rückschlagklappe**
Non-return flap
Clapet battant

(30) Priorität: 12.01.2011 AT 402011
(43) Veröffentlichungstag der Anmeldung: 18.07.2012
(73) Patentinhaber: PRAHER Kunststofftechnik GmbH, 4311 Schwertberg (AT)
(72) Erfinder: Praher, Winfried, 4320 Perg (AT); Pühringer, Rainer, Dr, 4040 Steyregg-Plesching (AT)
(74) Vertreter: Jell, Friedrich

(56) Entgegenhaltungen:
- DE-U1- 8 909 368
- US-A- 3 726 308
- US-A- 4 781 214
- US-A- 4 825 902

## Beschreibung

Die Erfindung betrifft eine Rückschlagklappe mit einem eine Durchflussöffnung aufweisenden Gehäuse und mit einer zum Schließen oder Öffnen der Durchflussöffnung vorgesehenen Klappe, die im Gehäuse über ihre Klappenwelle zwischen einer Schließ- und wenigstens einer Offenlage verschwenkbar gelagert ist.

Um eine Klappenwelle einer Klappe in einem Gehäuse einer Rückschlagklappe vergleichsweise leicht drehbar zu lagern, ist es bekannt (US 4,825,902 A1 oder DE8909368U1) zwischen dem Gehäuse und der innenliegenden Klappenwelle einen Zwischenraum vorzusehen. Generell nachteilig bei solchen Lagerungen ist, dass sich gerade im Bereich der Welle, insbesondere im Bereich dieses Zwischenraums, eine erhöhte Verschmutzungsgefahr ergibt, weil sich dort unter anderem aufgrund der offenliegenden Klappenscheibe eine Ruhezone im Flüssigkeitsstrom durch die Rückschlagklappe ausbilden kann. Verunreinigungen im Flüssigkeitsstrom werden sich daher insbesondere in diesem strömungsberuhigten Klappenbereich vermehrt ansammeln, was zu einer Beeinträchtigung der Beweglichkeit der Klappe und damit zu einer Funktionsbeeinträchtigung, sowie im äußersten Fall zu einem Wellenbruch und damit zu einem Versagen der Rückschlagklappe führen kann. Standfeste Rückschlagklappen in Anwendungsgebieten mit erhöhter Verschmutzungsgefahr können damit nicht geschaffen werden.

Des Weiteren ist eine Rückschlagklappe bekannt (US 3,726,308 A1 oder US 4,781,214 A1) bekannt, die eine Klappe mit zwei Klappenwellen aufweist. Auch hier können Verschmutzungen im Bereich der Klappenwellen nicht ausgeschlossen werden. Eine vergleichsweise hohe Standfestigkeit und Funktionssicherheit kann solch eine Rückschlagklappe nicht gewährleisten.

Es ist daher Aufgabe der Erfindung, eine Rückschlagklappe der eingangs geschilderten Art auf konstruktiv einfache Weise derart zu verbessern, dass damit selbst in Anwendungsgebieten mit erhöhter Verschmutzungsgefahr eine hohe Standfestigkeit und Funktionssicherheit erreicht werden kann. Außerdem soll die Rückschlagklappe kostengünstig und einfach herzustellen sein.

Die Erfindung löst die gestellte Aufgabe dadurch, dass die Mantelfläche der Klappenwelle eine nutförmige Ausnehmung zur Ausbildung eines Strömungskanals zwischen der Klappenvorder- und -rückseite in wenigstens einer Offenlage der Klappe aufweist.

Weise die Klappenwelle eine nutförmige Ausnehmung zur Ausbildung eines Strömungskanals zwischen der Klappenvorder- und -rückseite in wenigstens einer Offenlage der Klappe auf, dann kann nicht nur verhindert werden, dass sich Verunreinigungen im Bereich der Klappenwelle ansammeln, es kann damit auch erreicht werden, dass sich bereits abgelagerte Verunreinigungen ablösen. Der sich auf Grundlage der nutförmige Ausnehmung ausbildende Strömungskanal kann nämlich selbst im Wellenbereich für eine ausreichende Flüssigkeitsumwälzung bzw. Umspülung der Welle sorgen, so dass dort auftretende Verunreinigungen einer Weiterbewegung unterworfen werden und damit keine Absetztendenzen aufweisen können. Zusätzlich können eventuell abgesetzte Verunreinigungen durch diese Flüssigkeitsumwälzung bzw. Umspülung der Welle gelöst werden, wodurch ein Anbacken der Verunreinigungen in diesen Bereichen der Rückschlagklappe ausgeschlossen werden kann. Die Ausnehmung der Klappenwelle kann nämlich erfindungsgemäß für einen verbesserten Strömungskanal zwischen der Klappenwelle und dem Gehäuse sorgen, wenn sich die Klappe in einer Offenlage befindet. Damit kann beispielsweise der Wellenbereich gegenüber Verschmutzungen robuster gehalten werden. Im Gegensatz zu Rückschlagklappen mit herkömmlichen Klappen bzw. Klappenwellen kann erfindungsgemäß durch die besondere konstruktive Ausführung der Klappenwelle eine vergleichsweise hohe Standzeit sowie Funktionssicherheit der Rückschlagklappe gewährleistet werden. Außerdem ist die Änderung an der Klappenwelle konstruktiv vergleichsweise einfach, sodass mit geringem Aufwand eine standfeste und kostengünstige Rückschlagklappe ermöglicht werden kann.

Umläuft die nutförmige Ausnehmung die Klappenachse der Klappenwelle wenigstens teilweise, kann bei einer Vielzahl an Offenlagen der Klappe eine Strömung und damit eine Flüssigkeitsumwälzung im Bereich der Klappenwelle sichergestellt werden. Neben einer verminderten Gefahr für Neuverschmutzungen kann sich damit auch eine erhöhte Selbstreinigung der Rückschlagklappe ergeben, wodurch die Standfestigkeit auch in vergleichsweise stark verschmutzten Anwendungsumgebungen verbessert werden kann.

Liegt die Klappe in ihrer Schließlage über eine konische Dichtfläche am Gehäuse an, dann kann die Standfestigkeit der Rückschlagklappe noch weiter verbessert werden. Insbesondere Druckpulsationen können von der Rückschlagklappe beschädigungssicherer abgefangen werden. Außerdem können die Konusform der Klappe und/oder auch die konusförmige Dichtfläche genutzt werden, die Selbstreinigung der Klappenwelle zu unterstützen, indem eine wenigstens teilweise zur Klappenwelle abgelenkte Strömung erzeugt wird. Zu diesem Zweck sind die Konusform der Klappe und/oder auch die konusförmige Dichtfläche in Richtung der Klappenwelle derart ausgerichtet, dass sich in einer Offenlage der Klappe eine auf die nutförmige Ausnehmung der Klappenwelle abgelenkte Strömung ergibt, um so die Flüssigkeitsumwälzung bzw. Umspülung der Welle zu verbessern. Verunreinigungen im Bereich der Welle werden so besser beseitigt, zudem können damit zusätzlich auch Ruhezonen im Strömungsfeld verringert werden. Hierfür können sich insbesondere so erzeugte turbulente Strömungen auszeichnen. Eine erhöhte Standfestigkeit der Rückschlagklappe sowie eine Sicherstellung ihrer Funktion können sich damit ergeben.

Einen besonders dichten Abschluss der Durchflussöffnung durch die Klappe kann geschaffen werden, wenn um den Konus der Klappe eine insbesondere schwalbenschwanzförmige Aufnahmenut verläuft, in der eine gegenüber dem Konus wenigstens teilweise vorstehende Dichtung vorgesehen ist. Ansammlungen von Verschmutzungen an der insbesondere als O-Ring ausgeführten Dichtung sowie an der Klappe sind so vermeidbar. Außerdem kann die Dichtung zur Dämpfung von mechanischen Schließbelastungen genutzt werden, um die Standfestigkeit der Rückschlagklappe zu verbessern.

Die Beschädigungsgefahr der Dichtung bei erhöhten Kraftbelastungen kann vermindert werden, wenn die Klappe einen Anschlag aufweist, der den Sitz des Konus der Klappe und damit die Deformation der Dichtung begrenzt.

Einfache Handhabungsverhältnisse bei der Montage der Rückschlagklappe können ermöglicht werden, wenn am Gehäuse eine insbesondere radial nach außen abstehende Positioniereinrichtung vorgesehen ist, die mit dem Gehäuse einstückig verbunden eine Sollbruchstelle ausbildet. Im Allgemeinen wird erwähnt, dass diese konstruktiven Merkmale unabhängig von Art und Form der Ausnehmung an der Klappenwelle gesehen werden können. Hinzu kommt, dass sich aufgrund einer einstückigen Ausführung von Gehäuse und Positioniereinrichtung die Herstellungskosten verringern und somit eine kostengünstige Rückschlagklappe geschaffen werden kann.

Bildet die Positioniereinrichtung eine Fingeraufnahme aus, dann kann die Handhabung der Rückschlagklappe noch weiter vereinfacht werden.

Die Standfestigkeit der Rückschlagklappe kann verbessert werden, wenn die Klappenwelle im Gehäuse über wenigstens ein radiales Gleitlager verschwenkbar gelagert ist. Das radiale Gleitlager kann nämlich für einen gleichmäßig verteilten Kraftabtrag von der Klappenwelle auf das Gehäuse sorgen, um so selbst hohen Kraftbelastungen standhalten zu können.

Erweitert eine Gehäuseausnehmung den Strömungskanal gegenüber dem Strömungskanal des Zwischenraums, dann kann das Strömungsverhalten des die Welle umspülenden Fluides angepasst werden. Strömungsbeschleunigungen können beispielsweise zur verbesserten Reinigungswirkung des Zwischenraums zwischen Gehäuse und Welle genutzt werden. Außerdem kann damit die Länge der Ausnehmung der Welle verkürzt werden, um konstruktive Einfachheit zu schaffen.

Wirkt die nutförmige Ausnehmung der Klappenwelle mit einer Gehäuseausnehmung zur Ausbildung des Strömungskanals zusammen, kann die Reinigungswirkung des Strömungskanals noch verbessert werden. Außerdem kann unter Zuhilfenahme einer Gehäuseausnehmung die Ausnehmung der Klappenwelle in einem vergleichsweise kleinen konstruktiven Rahmen bleiben, um die Gefahr ihrer mechanischen Schwächung gering zu halten. Größer konstruktive Freiheiten können so entstehen, was beispielsweise für eine Anpassung der Rückschlagklappe hinsichtlich bestimmter Parameter - etwa der physikalischen Eigenschaften oder der Durchflussgeschwindigkeit eines durch die Rückschlagklappe strömenden Mediums und/oder dessen zu erwartender Verschmutzungsgrad - genützt werden kann.

Insbesondere hat sich als vorteilhaft herausgestellt, wenn eine Klappe mit einer nutförmige Ausnehmung an ihrer Klappenwelle bei einer Rückschlagklappe zur Ausbildung eines Strömungskanals zwischen der Klappenvorder- und -rückseite in wenigstens einer Offenlage der Klappe verwendet wird, weil damit die Klappenwelle verbessert hinterspült und damit frei von Verunreinigungen gehalten werden kann.

Es ist außerdem Aufgabe der Erfindung, eine Klappe, insbesondere ein Ersatzteil bez. Austauschteil, für eine Rückschlagklappe zu schaffen, mit welcher Klappe die Standfestigkeit und Funktionssicherheit der Rückschlagklappe verbessert werden kann.

Die Erfindung löst die gestellte Aufgabe dadurch, dass die Klappenwelle eine nutförmige Ausnehmung zur Ausbildung eines Strömungskanals zwischen der Klappenvorder- und -rückseite in wenigstens einer Offenlage der Klappe aufweist.

Weist die Klappenwelle eine nutförmige Ausnehmung zur Ausbildung eines Strömungkanals zwischen der Klappenvorder- und -rückseite in wenigstens einer Offenlage der Klappe auf, dann kann damit eine Klappe geschaffen werden, die nicht nur vergleichsweise einfach in eine bestehende Rückschlagklappe eingesetzt werden, sondern auch zu einer besonderen Erhöhung der Standfestigkeit der Rückschlagklappe führen kann. Durch die nutförmige Ausnehmung kann nämlich ohne weitere Maßnahmen ein Hinterspülen der Klappenwelle verbessert werden, wodurch sich Verunreinigungen in diesem Bereich erschwert ansetzen können. Außerdem kann auf Grundlage der Selbstreinigung die Klappenfunktion, insbesondere Schließfunktion, auch bei langem Betrieb sichergestellt werden.

In den Figuren ist beispielsweise der Erfindungsgegenstand anhand eines Ausführungsbeispiels dargestellt. Es zeigen
- Fig. 1: eine Frontansicht auf eine Rückschlagklappe,

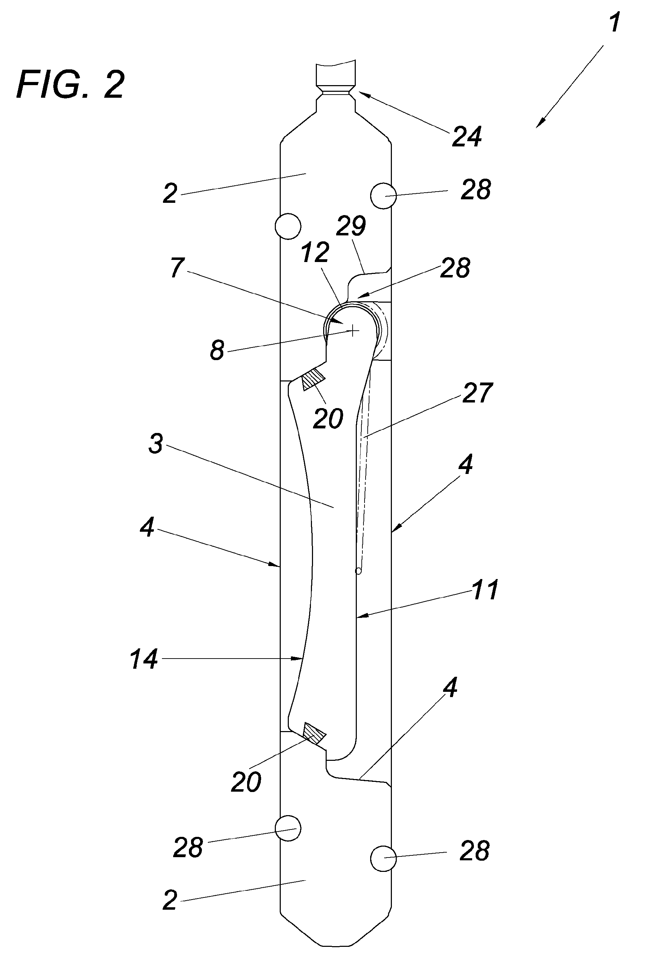

- Fig. 2: eine Schnittansicht nach II-II der Fig. 1,
- Fig. 3: eine vergrößerte Teilansicht zur Fig. 2 und
- Fig. 4: eine Ansicht gemäß Fig. 3 mit offenstehender Klappe.

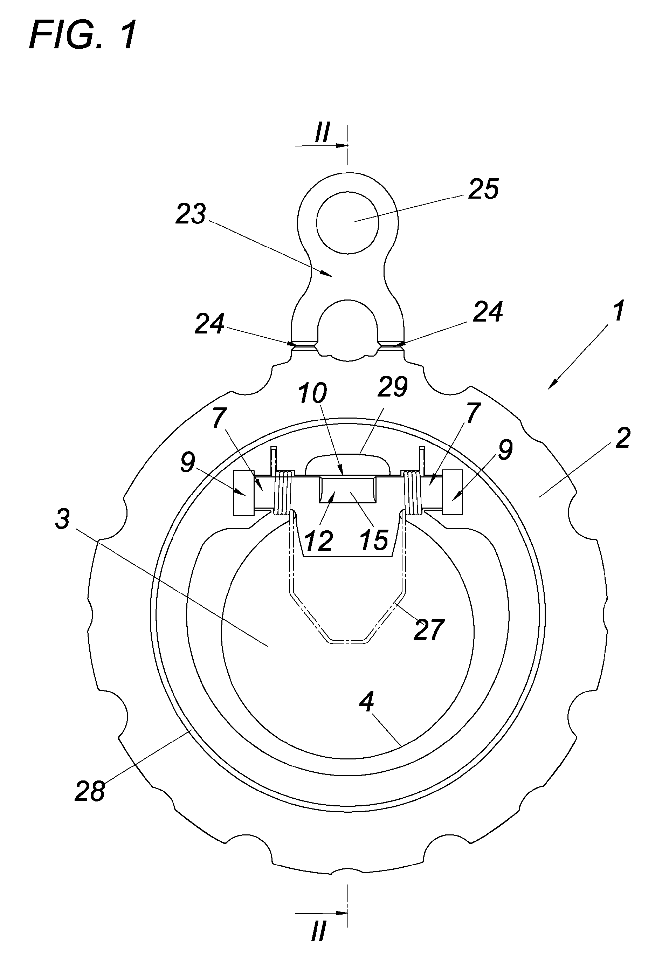

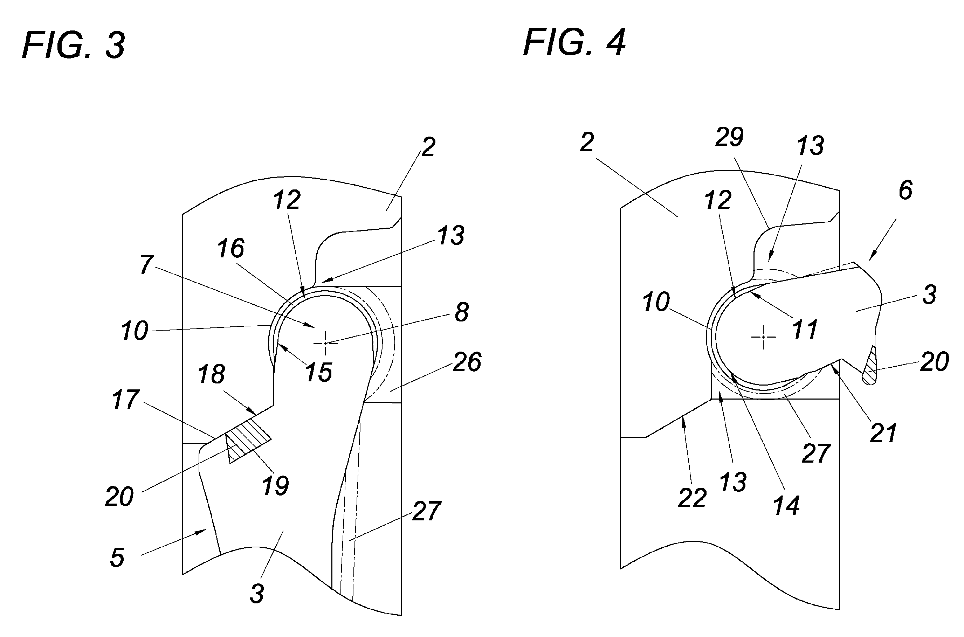

Die nach Fig. 1 beispielsweise dargestellte Rückschlagklappe 1 weist ein Gehäuse 2 auf, an dem eine Klappe 3 verschwenkbar gelagert ist. Die Klappe 3 dient zum Schließen bzw. Öffnen einer Durchflussöffnung 4 des Gehäuses 1, indem diese Klappe 3 eine Schließlage 5 bzw. Offenlage 6 einnimmt, welche Lagen der Klappe 3 insbesondere im Vergleich der Figuren 3 und 4 entnommen werden können. Es ist durchaus vorstellbar, dass die Klappe unterschiedliche Offenlagen 6 einnehmen kann, insbesondere, weil diese Offenlagen 6 auch durch Parameter des Flüssigkeitsstroms geprägt werden, welche anderen Lagen jedoch nicht näher dargestellt worden sind. Des Weiteren wird noch erwähnt, dass selbstverständlich auch angeschlossene und nicht näher dargestellte Armaturen, insbesondere Rohrteile, die Offenlagen 6 der Klappe 3 begrenzen können. Im Allgemeinen wird weiter erwähnt, dass unter einer Offenlage 6 auch eine Offenstellung der Klappe 3 gegenüber der Durchflussöffnung 4 verstanden werden kann. Die Klappe 3 ist - wie in Fig. 1 ersichtlich - über eine Klappenwelle 7 im Gehäuse 2 schwenkbar um eine Klappenachse 8 gelagert und zwar endseitig über je eine Lagerstelle 9. Für eine leichte Schwenkbarkeit der Klappenwelle 7 ist diese zwischen seinen Lagerstellen 9 gegenüber dem Gehäuse beabstandet vorgesehen, so dass sich hier ein Zwischenraum 10 ausbildet. Gerade solch ein Zwischenraum 10 unterliegt einer erhöhten Verschmutzungsgefahr, so dass eine sichere Funktion der Klappe 3 nicht gewährleistet werden kann, insbesondere wenn die Rückschlagklappe 1 in erhöht verschmutzten Anwendungsbereichen eingesetzt wird. Im Bereich der Rückseite 11 der Klappe 5 können sich nämlich in der Offenlage 6 beruhigte Zonen im Strömungsfeld ausbilden, so dass dort mit vermehrt ausfallenden Verunreinigungen zu rechnen ist. Um nun diesen Umstand der erhöhten Verschmutzung des Bereichs der Klappenwelle 7 auszuschließen bzw. damit eine standfeste Rückschlagklappe 1 zu schaffen, wird erfindungsgemäß vorgeschlagen, dass die Klappenwelle 7 eine Ausnehmung 12 zur Ausbildung eines Strömungskanals 13 zwischen der Klappenvorder- und -rückseite 14, 11 in wenigstens einer Offenlage 6 der Klappe 3 aufweist. In der Schließlage 5 besteht also kein Strömungskanal 13 zwischen der Klappenvorder- und -rückseite 14, 11, womit die Rückschlagklappe 1 auch nicht kurzgeschlossen ist. Anhand des Strömungskanals 13 kann nun für eine ausreichende Flüssigkeitsumwälzung bzw. Umspülung der Klappenwelle 7 gesorgt werden, was insbesondere in der Fig. 4 erkannt werden kann, so dass dort auftretende Verunreinigungen keine Absetztendenzen aufweisen können. Die Ruhezonen im Bereich der Klappenwelle 7 können so vermindert werden, so dass selbst eine standfeste Verwendung der Rückschlagklappe 1 in starken verschmutzten Umgebungen möglich wird. Hinzu kommt, dass selbst sich in der Schließlage 5 der Klappe 3 absetzende Verunreinigungen durch die erfindungsgemäße Ausnehmung 12 aus dem Bereich der Klappenwelle 7 gelöst werden können, wenn die Klappe in seine Offenlage 6 wechselt und sich damit ein Strömungskanal 13 für eine Selbstreinigung öffnet. Derartige Verschmutzungen können insbesondere dann auftreten, wenn die Rückschlagklappe 1 in vertikalen Rohrleitungen Verwendung findet, was nicht näher dargestellt worden ist.

Die Mantelfläche 15 der Klappenwelle 7 bildet die Ausnehmung 12 aus, wobei der Einfachheit halber diese Ausnehmung 12 in Form einer Nut 16 ausgeprägt ist, was den Figuren 1 und 3 entnommen werden kann. Es ist auch vorstellbar, eine derartige Nut 16 in die Klappenwelle 7 nachträglich einzubringen, um herkömmliche Klappen 3 hinsichtlich ihrer Funktionssicherheit zu verbessern. Die Ausnehmung 12 umläuft die Klappenachse 8 der Klappenwelle 7 mehr als 180 Grad jedoch nur teilweise. Damit kann in jeder Offenlage 6 der weniger als 180 Grad verschwenkbaren Klappe 3 ein Strömungskanal 13 zur Selbstreinigung des Zwischenraums 10 geschaffen werden.

Die Klappe 3 bzw. deren Klappenscheibe liegt in ihrer Schließlage 5 über eine konische Dichtfläche 17 am Gehäuse 3 an, wodurch die Rückschlagklappe 1 eine besondere Standfestigkeit auch bei hohen Schließkräften der Klappe 3 aufweisen kann. Des Weiteren ist der Verlauf die konische Dichtfläche 17 derart gegenüber der Klappenwelle 7 ausgerichtet, dass sich damit eine Strömung in Richtung der Klappenwelle 7 ausbilden kann, wenn sich die Klappe 3 in einer Offenlage 6 befindet. Diese Strömung kann auch turbulent ausgeprägt sein. Eine verbesserte Selbstreinigung des Bereichs der Klappenwelle insbesondere eine verbesserte Funktion der einen Strömungskanal 13 ausbildenden Ausnehmung 12 kann so ermöglicht werden.

Um den Konus 18 der Klappe 3 verläuft eine geschlossene schwalbenschwanzförmige Aufnahmenut 19. In diese Aufnahmenut 19 ist eine gegenüber dem Konus 18 in der Offenlage 6 der Klappe 3 wenigstens teilweise vorstehende Dichtung 20 vorgesehen.

Des Weiteren weist die Klappe 3 einen Anschlag 21 auf. Durch diesen Anschlag 21 wird der Sitz 22 des Konus 18 und damit die Deformation der Dichtung 20 begrenzt.

Am Gehäuse 2 ist weiter eine radial nach außen abstehende Positioniereinrichtung 23 vorgesehen. Gehäuse 2 und Positioniereinrichtung 23 sind einstückig ausgeführt. Die Positioniereinrichtung 23 bildet jedoch zwei Sollbruchstellen 24 aus, um so vom Gehäuse einfach abgetrennt werden zu können. Des Weiteren ist bei der Positioniereinrichtung 23 eine Fingeraufnahme 25 vorgesehen, um einfache Handhabungsverhältnisse zu schaffen.

Vorteilhafte Schwenkverhältnisse ergeben sich dadurch, dass die Klappenwelle 7 im Gehäuse 2 über zwei als radiale Gleitlager ausgebildete Lagerstellen 9 verschwenkbar gelagert ist. Eine Lagerhälfte des Gleitlagers wird durch ein in das Gehäuse eingesetzte Sicherungsteil 26 gebildet - die andere Lagerhälfte vom Gehäuse 2 selbst.

Als Schließhilfe der Klappe 3 ist eine Schließfeder 27 vorgesehen, wobei das Gehäuse weiters O-Ringe 28 aufweist, um beispielsweise einen dichten Anschluss an nicht weiter dargestellten Armaturen zu ermöglichen.

Wie insbesondere der Figur 4 entnommen werden kann, erweitert sich der Strömungskanal 13 gegenüber dem Strömungskanal 13 des Zwischenraums 10 durch eine Gehäuseausnehmung 29 im Gehäuse 2. Damit kann auch die Reinigungswirkung im Bereich der Klappenwelle 7 noch weitere verbessert werden, insbesondere, wenn dafür die Ausnehmung 12 der Klappenwelle 7 mit einer Gehäuseausnehmung 29 zur Ausbildung des Strömungskanals 13 zusammenwirkt, um auf die Strömungsgeschwindigkeit einzuwirken.

## Patentansprüche

1. Rückschlagklappe mit einem eine Durchflussöffnung (4) aufweisenden Gehäuse (2) und mit einer zum Schließen oder Öffnen der Durchflussöffnung (4) vorgesehenen Klappe (3), die im Gehäuse (2) über ihre durchgehende Klappenwelle (7) zwischen einer Schließ- und wenigstens einer Offenlage (5 und 6) verschwenkbar gelagert ist, **dadurch gekennzeichnet, dass** die Mantelfläche (15) der Klappenwelle (7) eine nutförmige Ausnehmung (12) zur Ausbildung eines Strömungskanals (13) zwischen der Klappenvorder- und - rückseite (14, 11) in wenigstens einer Offenlage (6) der Klappe (3) aufweist.

2. Rückschlagklappe nach Anspruch 1, **dadurch gekennzeichnet, dass** die nutförmige Ausnehmung (12) die Klappenachse (8) der Klappenwelle (7) wenigstens teilweise umläuft.

3. Rückschlagklappe nach Anspruch 1 bis 2, **dadurch gekennzeichnet, dass** die Klappe (3) in ihrer Schließlage (5) über eine konische Dichtfläche (17) am Gehäuse (2) anliegt.

4. Rückschlagklappe nach einem der Ansprüche 1 bis 3, **dadurch gekennzeichnet, dass** um den Konus (18) der Klappe (3) eine insbesondere schwalbenschwanzförmige Aufnahmenut (19) verläuft, in der eine gegenüber dem Konus (18) in der Offenlage (6) der Klappe (3) wenigstens teilweise vorstehende Dichtung (20) vorgesehen ist.

5. Rückschlagklappe nach Anspruch 4, **dadurch gekennzeichnet, dass** die Klappe (3) einen Anschlag (21) aufweist, der den Sitz (22) des Konus (18) der Klappe (3) und damit die Deformation der Dichtung (20) begrenzt.

6. Rückschlagklappe nach einem der Ansprüche 1 bis 5, **dadurch gekennzeichnet, dass** am Gehäuse (2) eine insbesondere radial nach außen abstehende Positioniereinrichtung (23) vorgesehen ist, die mit dem Gehäuse (2) einstückig verbunden wenigstens eine Sollbruchstelle (24) ausbildet.

7. Rückschlagklappe nach Anspruch 6, **dadurch gekennzeichnet, dass** die Positioniereinrichtung (23) eine Fingeraufnahme (25) ausbildet.

8. Rückschlagklappe nach einem der Ansprüche 1 bis 7, **dadurch gekennzeichnet, dass** die Klappenwelle (7) im Gehäuse (2) über wenigstens ein radiales Gleitlager (26) verschwenkbar gelagert ist.

9. Rückschlagklappe nach einem der Ansprüche 1 bis 8, **dadurch gekennzeichnet, dass** eine Gehäuseausnehmung (29) den Strömungskanal (13) gegenüber dem Strömungskanal (13) des Zwischenraums (10) erweitert.

10. Rückschlagklappe nach einem der Ansprüche 1 bis 9, **dadurch gekennzeichnet, dass** die nutförmige Ausnehmung (12) der Klappenwelle (7) mit einer Gehäuseausnehmung (29) zur Ausbildung des Strömungskanals (13) zusammenwirkt.

## Claims

1. A non-return valve, comprising a housing (2) having a flow opening (4) and a flap (3) which is provided for closing or opening the flow opening (4) and which is pivotably mounted in the housing (2) via its continuous flap shaft (7) between a closing position and at least one opening position (5 and 6), **characterized in that** the jacket area (15) of the flap shaft (7) has a groove-like recess (12) for forming a flow channel (13) between the front and rear side (14, 11) of the flap in at least one opening position (6) of the flap (3).

2. A non-return valve according to claim 1, **characterized in that** the groove-like recess (12) at least partly surrounds the flap axis (8) of the flap shaft (7).

3. A non-return valve according to claim 1 or 2, **characterized in that** the flap (3) rests in its closing position (5) via a conical sealing surface (17) on the housing (2).

4. A non-return valve according to one of the claims 1 to 3, **characterized in that** an especially dovetail-shaped receiving groove (19) extends around the cone (18) of the flap (3), in which a seal (20) is provided which protrudes at least partly in relation to the cone (18) in the opening position (6) of the flap (3).

5. A non-return valve according to claim 4, **characterized in that** the flap (3) comprises a stop (21) which limits the seat (22) of the cone (18) of the flap (3) and thus the deformation of the seal (20).

6. A non-return valve according to one of the claims 1 to 5, **characterized in that** a positioning device (23) is provided on the housing (2), which positioning device especially protrudes radially to the outside and which, integrally connected to the housing (2), forms at least one predetermined breaking point (24).

7. A non-return valve according to claim 6, **characterized in that** the positioning device (23) forms a finger receiver (25).

8. A non-return valve according to one of the claims 1 to 7, **characterized in that** the flap shaft (8) in the housing (2) is pivotably mounted via at least one radial plain bearing (26).

9. A non-return valve according to one of the claims 1 to 8, **characterized in that** a housing recess (2) expands the flow channel (13) in relation to the flow channel (13) of the intermediate space (10).

10. A non-return valve according to one of the claims 1 to 9, **characterized in that** the groove-like recess (12) of the flap shaft (7) cooperates with a housing recess (29) for forming the flow channel (13).

## Revendications

1. Clapet antiretour avec un corps (2) présentant une ouverture d'écoulement (4) et avec un clapet (3) prévu pour fermer ou ouvrir l'ouverture d'écoulement (4), qui est supporté dans le corps (2) par son arbre de clapet (7) traversant de façon à pouvoir pivoter entre une position de fermeture et au moins une position d'ouverture (5 et 6), **caractérisé en ce que** la surface d'enveloppe (15) de l'arbre de clapet (7) présente un évidement en forme de gorge (12) pour former un canal d'écoulement (13) entre les faces avant et arrière (14, 11) du clapet dans au moins une position d'ouverture (6) du clapet (3).

2. Clapet antiretour selon la revendication 1, **caractérisé en ce que** l'évidement en forme de gorge (12) entoure au moins partiellement l'axe de clapet (8) de l'arbre de clapet (7).

3. Clapet antiretour selon la revendication 1 à 2, **caractérisé en ce que** le clapet (3) repose sur le corps (2) dans sa position de fermeture (5) par l'intermédiaire d'une surface d'étanchéité conique (17).

4. Clapet antiretour selon l'une des revendications 1 à 3, **caractérisé en ce qu'**il est prévu autour du cône (18) du clapet (3) une gorge de logement (19), en particulier en queue d'aronde, dans laquelle est prévu un joint (20) qui dépasse au moins partiellement par rapport au cône (18) dans la position d'ouverture (6) du clapet (3).

5. Clapet antiretour selon la revendication 4, **caractérisé en ce que** le clapet (3) présente une butée (21) qui délimite l'assise (22) du cône (18) du clapet (3) et ainsi la déformation du joint (20).

6. Clapet antiretour selon l'une des revendications 1 à 5, **caractérisé en ce qu'**il est prévu sur le corps (2) un dispositif de positionnement (23), en particulier en saillie vers l'extérieur dans le sens radial, qui est relié avec le corps (2) d'un seul tenant et forme au moins un point de rupture (24).

7. Clapet antiretour selon la revendication 6, **caractérisé en ce que** le dispositif de positionnement (23) forme un réceptacle pour un doigt (25).

8. Clapet antiretour selon l'une des revendications 1 à 7, **caractérisé en ce que** l'arbre de clapet (7) est supporté dans le corps (2) de façon à pouvoir pivoter par au moins un palier de glissement radial (26).

9. Clapet antiretour selon l'une des revendications 1 à 8, **caractérisé en ce qu'**un évidement du corps (29) élargit le canal d'écoulement (13) par rapport au canal d'écoulement (13) de l'espace intermédiaire (10).

10. Clapet antiretour selon l'une des revendications 1 à 9, **caractérisé en ce que** l'évidement en forme de gorge (12) de l'arbre de clapet (7) coopère avec un évidement du corps (29) pour former le canal d'écoulement (13).
